(19) Europäisches Patentamt / European Patent Office / Office européen des brevets

(11) **EP 2 660 345 B1**

(12) **EUROPEAN PATENT SPECIFICATION**

(45) Date of publication and mention
of the grant of the patent:
**15.04.2020 Bulletin 2020/16**

(21) Application number: **11852379.4**

(22) Date of filing: **14.12.2011**

(51) Int Cl.:
*C22C 38/00* (2006.01)     *C22C 38/02* (2006.01)
*C22C 38/04* (2006.01)     *C22C 38/06* (2006.01)
*C22C 38/12* (2006.01)     *C22C 38/14* (2006.01)
*C21D 8/00* (2006.01)      *C21D 8/02* (2006.01)
*C21D 9/46* (2006.01)      *C21D 1/18* (2006.01)
*C21D 1/673* (2006.01)     *C23C 2/12* (2006.01)
*C23C 2/06* (2006.01)      *B32B 15/01* (2006.01)
*C22C 38/34* (2006.01)     *C22C 38/38* (2006.01)
*C22C 38/60* (2006.01)     *C22C 38/08* (2006.01)
*C22C 38/16* (2006.01)     *C22C 38/18* (2006.01)

(86) International application number:
**PCT/KR2011/009634**

(87) International publication number:
**WO 2012/091328 (05.07.2012 Gazette 2012/27)**

(54) **MOLDING MEMBER, AND METHOD FOR MANUFACTURING SAME**

FORMTEIL UND HERSTELLUNGSVERFAHREN DAFÜR

ÉLÉMENT DE MOULAGE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2010 KR 20100135166**

(43) Date of publication of application:
**06.11.2013 Bulletin 2013/45**

(73) Proprietor: **POSCO
Pohang
Kyungsangbook-do 790-300 (KR)**

(72) Inventors:
• **OH, Jin-Keun
Gwangyang-si
Jeollanam-do 545-711 (KR)**
• **KWAK, Jai-Hyun
Gwangyang-si
Jeollanam-do 545-711 (KR)**
• **CHO, Yeol-Rae
Gwangyang-si
Jeollanam-do 545-711 (KR)**
• **KIM, Ki-Soo
Pohang-si
Kyungsangbook-do 790-751 (KR)**

(74) Representative: **Zech, Stefan Markus et al
Meissner Bolte Patentanwälte
Rechtsanwälte Partnerschaft mbB
Postfach 86 06 24
81633 München (DE)**

(56) References cited:
EP-A1- 1 149 928     EP-A1- 1 365 037
EP-A1- 1 889 935     EP-A1- 2 053 140
EP-A2- 1 512 760     WO-A1-2007/064172
WO-A1-2007/129676    WO-A1-2007/129676
JP-A- H1 096 031     JP-A- 2005 097 725
JP-A- 2006 152 427   JP-A- 2006 212 663
KR-A- 20090 000 295  KR-A- 20090 124 263

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a formed member, and a method for manufacturing the formed member, and more particularly, to a formed member having high strength and ductility such as an automotive structural member and a reinforcing member, a formed member, and a method for manufacturing the formed member.

[Background Art]

As safety requirements and weight-reduction demands made on automobiles increase, research has been conducted into developing high strength and impact-resistant steel sheets as automotive body materials. However, high-strength steel sheets for automobiles may be difficult to form into desired shapes, and thus there is a limit on increasing the strength of steel sheets for automobiles.

To address these problems, Korean Patent Application Publication No. 2007-0110914 discloses a steel sheet having enhanced formability and 800-MPa grade tensile strength through the transformation of retained austenite into martensite. However, large amounts of substances such as carbon (C) and manganese (Mn) have to be added to increase the strength of the steel sheet up to 1000 MPa grade, which increases costs and abrasion of cold forming dies and makes it difficult to correct the shape of the steel sheet.

As advanced techniques proposed to solve the problems, Korean Patent Application Publication No. 2007-0057689 (belonging to the same patent family with WO 2007/064172 A1) and US Patent No. 6296805 disclose techniques of performing a heat treatment and a pressing process on a steel sheet in a single phase of austenite having low strength but high formability, and then rapidly cooling the steel sheet using dies so as to implement martensite as a main microstructure in the steel sheet and to provide ultra-high strength. However, steel sheets obtained by the techniques have low degrees of elongation at less than 10%, and thus cannot have sufficient resistance against impacts generating in automobiles.

[Disclosure]

[Technical Problem]

Aspects of the present invention provide a formed member having ultra high strength and ductility by a heat treatment, made of a steel sheet, and a method for manufacturing the formed member.

[Technical Solution]

The invention is defined in the claims.

[Advantageous Effects]

The present invention provides a formed member having high strength and ductility that can be used for forming an automotive structural member, a reinforcing member, etc. In addition, the formed member can be used for a heat-treatable impact resistant member.

[Description of Drawings]

FIG. 1 is a graph illustrating process conditions of the present invention.
FIG. 2(a) is a microstructure image of Comparative Specimen 6 of an example of the present invention.
FIG. 2(b) is a microstructure image of Inventive Specimen 7 of the example of the present invention.

[Best Mode]

According to the present invention, a formed member having improved elongation is manufactured using a steel sheet by properly selecting the composition of the steel sheet, quenching the steel sheet to an Ms-Mf temperature range, and heating the steel sheet to be within a temperature range equal to or lower than Ac1 and maintaining the steel sheet within the temperature range. In the related art, a high strength member is manufactured using a steel sheet by performing a hot forming process on the steel sheet and then quenching the hot-formed steel sheet to a temperature lower than Mf so that martensite can become the main microstructure of the steel sheet. In the present invention, however, the steel sheet is cooled to the Ms-Mf temperature range in which transformation to martensite continues to retain a sufficient amount of austenite in the microstructure of the steel sheet, and the retained austenite is properly maintained at a temperature equal to or lower than Ac1 to concentrate carbon of the martensite on the retained austenite, which makes the retained austenite stable when the steel sheet is cooled again so that some of the retained austenite can stably reach room temperature without transformation while the remainder of the retained austenite transforms to martensite.

The present invention will now be described in more detail.

In the following description, a formed member means a member formed by deforming the steel sheet into a desired shape and includes any members used in fields requiring the physical properties of the steel sheet of the present invention.

C: 0.1% to 1.0% (hereinafter, % refer to weight%)

C is an essential element for increasing the strength of the steel sheet, and in the present invention it is required to add C to the steel sheet to appropriately retain austenite in the microstructure of the steel sheet. If the concentration of C in the steel sheet is lower than 0.1%, sufficient strength may not be obtained although the steel sheet is heat-treated in a single phase austenite region, and it is difficult to retain 5% or more of austenite when performing a heat treatment on the steel sheet after a hot forming process or a cold forming process. If the concentration of C in the steel sheet is greater than 1.0%, the toughness and welding characteristics of the steel sheet may deteriorate. In addition, when pickling and rolling a hot-rolled steel sheet, it is difficult to weld the steel sheet. Furthermore, when an annealing process or a plating process is performed, it is difficult to deform the steel sheet by cold rolling because the steel sheet may have too much high strength. Therefore, the concentration of C may be maintained in the range of 0.1% to 1.0%.

Si+Al: 0.4% to 3.0%

Si and Al are important elements in the present invention. When maintaining the steel sheet at a temperature equal to or lower than Ac1 after quenching the steel sheet to a temperature between Ms and Mf, Si and Al prevent the precipitation of carbon from martensite so that a large amount of carbon can be concentrated on non-transformed and retained austenite and thus the austenite can be stably retained in a final product member. If the total concentration of Si and Al is less than 0.4%, such effects may not be obtained, and if the total concentration of Si and Al exceeds 3%, it is difficult to remove scale from a hot-rolled steel sheet, and when manufacturing a formed member, a heat treatment has to be performed at a higher temperature, which increases manufacturing costs. Therefore, the concentration of Si and Al may be set to be within the range of 0.4% to 3%.

Mn: 0.1% to 5.0%

Mn is a solid-solution strengthening element which increases the strength of the steel sheet, delays transformation of austenite to ferrite, and lowers the Ac3 temperature. If the concentration of Mn is less than 0.1%, a high-temperature heat treatment is necessary to treat the steel sheet in a single phase austenite region. However, a high-temperature heat treatment increases oxidation of the steel sheet, and when the steel sheet is plated, a high-temperature heat treatment decreases the heat resistance of the steel sheet even though the steel sheet is plated. In addition, although a heat treatment is performed on the steel sheet in a two phase region where ferrite and austenite coexist, the steel sheet may not have a desired degree of strength. If the concentration of Mn exceeds 5.0%, welding and hot-rolling characteristics of the steel sheet may deteriorate. Therefore, the concentration of Mn may be in the range of 0.1% to 5.0%.

P: 0.0001% to 0.1%

Like Si, P prevents generation of carbides when martensite is heat-treated. However, if the concentration of P is excessive, welding characteristics of the steel sheet deteriorate, and thus the upper limit of the concentration of P is set to be 0.1%. In addition, since it may be relatively expensive to adjust the concentration of P to be lower than 0.0001%, the lower limit of the concentration of P may be set to be 0.0001%.

S: 0.0001% to 0.03%

S exists in the steel sheet as an impurity and worsens the ductility and welding characteristics of the steel sheet. If the concentration of S is 0.03% or lower, such undesirable effects are negligible, and thus the upper limit of the concentration of S may be set to be 0.03%. In addition, since it may be relatively expensive to to adjust the concentration of S to be lower than 0.0001%, the lower limit of the concentration of S may be set to be 0.0001%.

N: 0.03% or lower (not including 0%)

N is an element inevitably included in steel. N forms nitrides to increase resistance against delayed fracture caused by hydrogen. In addition, solute N increases the yield strength of the steel sheet when a bake hardening treatment is performed on the steel sheet after painting. If the concentration of N exceeds 0.03%, slabs may become sensitive to cracks and bubbles may be easily generated in slabs during a continuous casting process. Therefore, the concentration of N may be set to be 0.03% or lower. For example, the concentration of N may be set to be 0.02% or lower. In another example, the concentration of N may be set to be 0.01% or lower.

The steel sheet including the above-listed concentrations of elements may further include: 0.01% to 2.0% of each of at least one element selected from the group consisting of Cr, Mo, and W which improve hardenability; 0.001% to 0.4% of each of at least one element selected from the group consisting of Ti, Nb, Zr, and V which improve precipitation hardening; 0.005% to 2.0% of each of at least one element of Cu and Ni which improve strength; 0.0001% to 0.01% of B which improves grain boundary hardening and hardenability; or 0.001% to 0.1% of Sb which improves plating characteristics.

Cr, Mo, W: 0.01% to 2.0% each

Cr, Mo, and W improve the hardenability of steel and are effective for increasing the strength of the steel. In addition, even in the case that steel is not sufficiently cooled because of unstable contact with dies during a high-temperature forming process, the steel can have proper strength owing to hardenability improved by Cr, Mo, and W. If the concentration of Cr, Mo, or W is lower than 0.01%, sufficient hardenability may not be obtained, and even in the case that the concentration of Cr, Mo, or W is greater than 2.0%, more effects are not obtained therefrom, but costs may be increased. Therefore, the concentration of each of Cr, Mo, or W may be set to be within the range of 0.01% to 2.0%.

Ti, Nb, Zr, V: 0.001% to 0.4% each

Ti, Nb, Zr, and V make steel stronger, smaller in grain size, and have good heat treatment characteristics. If the concentration of Ti, Nb, Zr, or V is 0.001% or less, such effects may not be obtained, and if the concentration of Ti, Nb, Zr, or V is greater than 0.4%, costs may increase unnecessarily. Therefore, the concentration of each thereof may range from 0.001% to 0.4%.

Cu, Ni: 0.005% to 2.0% each

Cu precipitates in micro sizes to increase the strength of steel. If the concentration of Cu is less than 0.005%, sufficient strength may not be obtained, and if the concentration of Cu is greater than 2.0%, workability may deteriorate. Ni improves the strength and heat-treatment characteristics of steel. If the concentration of Ni is less than 0.005%, such effects may not be obtained, and if the concentration of Ni is greater than 2.0%, costs increase. Therefore, the concentration of each of Cu and Ni may be set to be within the range of 0.005% to 2.0%.

B: 0.0001% to 0.01%

B improves hardenability, and even in the case that a small amount of B is added to steel, the strength of the steel can be markedly increased after a heat treatment. If the concentration of B is less than 0.0001%, this effect may not be obtained, and even in the case that the concentration of B is greater than 0.01%, the effect may not be further improved and hot forming characteristics may deteriorate. Therefore, the concentration of B may be set to be within the range of 0.0001% to 0.01%.

Sb: 0.001% to 0.1%

Sb concentrates on the surface of the steel sheet, and thus during annealing, Si and Al added in the steel sheet can be prevented from concentrating on the surface of the steel sheet as Si and Al oxides which deteriorate plating characteristics of the steel sheet. If the concentration of Sb is less than 0.001%, such effects may not be obtained, and if the concentration of Sb is greater than 0.1%, the hot forming characteristics of the steel sheet deteriorate. Therefore, the concentration of Sb may be set to be within the range of 0.001% to 0.1%.

A formed member of the present invention has a microstructure consisting of: 5% to 40% by area fraction of retained austenite; 60% to 95% by area fraction of martensite; and 10% or less by area fraction of ferrite (including 0%) . If the area fraction of retained austenite is less than 5%, the formed member may not have high elongation which is an object of the present invention. On the contrary, adjusting the area fraction of retained austenite to be greater than 40% requires the addition of large amounts of C, Si, and Al, which makes it difficult to manufacture the formed member.

As mentioned above, the formed member includes martensite in addition to the retained austenite. Martensite may be generated when the formed member is quenched to a temperature range of Ms to Mf. In addition, martensite may be generated when the formed member is cooled after being heat-treated at a temperature lower than Ac1. At this time, carbide may generated in the martensite. The formed member includes 60% to 95% by area fraction of the martensite. If the area fraction of the martensite is less than 60%, the formed member may not have a desired degree of strength, and if the area fraction of the martensite is greater than 95%, the area fraction of the retained austenite becomes insufficient. The martensite may include non-tempered martensite and tempered martensite.

If the formed member is heat-treated at a temperature between Ac1 and Ac3 or is slowly cooled after a heat treatment, ferrite may be generated. The area fraction of the ferrite in the formed member is set to not exceed 10%. If the area fraction of the ferrite exceeds 10%, the formed member may not have a desired degree of strength.

An object of the present invention is to provide a formed member having a tensile strength of 1000 Mpa or greater and elongation of 10% or greater by adjusting the composition and microstructure of the steel sheet as described above and manufacturing the formed member as described below. Upper limits of the tensile strength and elongation of the steel sheet are not mentioned because it is preferable that the steel sheet have as much tensile strength and elongation as possible.

A method for manufacturing a steel sheet such as a hot-rolled steel sheet, a cold-rolled steel sheet, or a plated steel sheet will now be explained.

A steel slab having the above-described composition is heated at 1000°C to 1300°C and is hot-rolled. If the heating temperature is lower than 1000°C, the continuous-cast structure of the slab may not become uniformed, and if the heating temperature is higher than 1300°C, manufacturing costs may increase. Then, the slab undergoes a finish hot rolling process at a temperature between Ar3 and 1000°C to form a hot-rolled steel sheet. If the process temperature of the finish hot rolling process is lower than Ar3, the hot rolling process may become a two-phase-region rolling process to mix grains of the hot-rolled steel sheet and make it difficult to perform the process. If the process temperature of the finish hot rolling process is higher than 1000°C, grains of the hot-rolled steel sheet may coarsen. Thereafter, the hot-rolled steel sheet is coiled at a temperature higher than Ms but equal to or lower than 750°C. If the hot-rolled steel sheet is coiled at a temperature of Ms or lower, transformation to martensite occurs to excessively increase the strength of the hot-rolled steel sheet, and if the hot-rolled steel sheet is coiled at a temperature higher than 750°C, the thickness of an oxide layer of the hot-rolled steel sheet increases. The hot-rolled steel sheet may be heat-treated according to the use thereof or may be pickled and used to form a formed member. After such a heat treatment or pickling process, the hot-rolled steel sheet may be plated to improve corrosion resistance. Then, the plated hot-rolled steel sheet may be used for form a formed member. The plating process is not limited to a particular type or method. Any proper plating types and methods known in the related art may be used for the plating process.

The hot-rolled steel sheet is pickled and cold-rolled. The reduction ratio of the cold rolling is not limited, for example, may be a commonly used value. The cold-rolled steel sheet is continuously annealed or batch-annealed. Process conditions of the annealing process are not limited. For example, the strength of the cold-rolled steel sheet may be reduced through the annealing process for the next cold forming process or heat treatment. As described above, the cold-rolled steel sheet may be plated. The plating process is not limited to a particular type or method because the plating process has substantially no influence on the properties of the cold-rolled steel sheet that are required in the present invention.

For example, the plating process for the cold-rolled steel sheet or hot-rolled steel sheet may be an aluminum plating process, a zinc plating process, an alloyed zinc plating process, or a zinc electroplating process. Instead of the plating process, a resin coating process may be performed by using at least one of solgel and aluminum powder.

As described above, the steel sheet may include by area fraction: 5% to 40% of retained austenite; 60% to 95% of martensite; and 10% or less (including 0%) of ferrite.

A method for manufacturing a formed member according to the invention will now be described.

The steel sheet manufactured as described above undergoes a pressing process in which the steel sheet is hot-pressed or cold-pressed and is heat-treated. The hot pressing is performed after the steel sheet is heated to an austenite region temperature equal to or higher than Ac3. However, in the case of the cold pressing, the steel sheet is cold-pressed and is then heated to an austenite region temperature equal to or higher than Ac3.

The pressed steel sheet is quenched to a temperature range between Ms and Mf. If the pressed steel sheet is quenched to a temperature higher than Ms, transformation to martensite may not occur but transformation to bainite may occur, and in the following cooling treatment, retained austenite may transform to martensite. In this case, the area fraction of martensite may not be 5% or higher. If the steel sheet is quenched to a temperature lower than Mf, austenite may not be retained while transformation to martensite. Therefore, even in the case that the steel sheet is maintained at a temperature equal to or lower than Ac1 for diffusing carbon, austenite may not be generated or 5% or less of austenite may be generated.

The steel sheet may be quenched to a temperature range between Ms and Mf(90%). The Mf(90%) temperature is a temperature for allowing about 10% of retained austenite. That is, if the steel sheet is quenched to a temperature higher than Mf(90%), more carbon may be concentrated in austenite, and 5% or more of retained austenite may be stably guaranteed even in the case that austenite transforms to martensite during reheating and cooling.

The quenching is performed at a rate of 10°C/s to 500°C/s. If the rate of quenching is lower than 10°C/s, ferrite or bainite may be generated and martensite may be insufficient. If the rate of quenching is higher than 500°C/s, even in the case that martensite generate sufficiently, process costs increase due to the excessively high quenching rate.

Thereafter, the quenched steel sheet is heated to a temperature equal to or lower than Ac1 and maintained at that temperature. If the heating, that is, tempering is performed in a two-phase region including ferrite and austenite at a temperature higher than Ac1, a large amount of ferrite may be generated and martensite may be rapidly softened, and thus the steel sheet may not have desired high strength. If the tempering is performed at a temperature lower than Ms, it may take too many time to diffuse carbon into austenite retained in the quenching process. Therefore, the tempering may be performed at a temperature equal to or higher than Ms.

In the above, when the quenched steel sheet is heated to a temperature equal to or lower than Ac1 and maintained at that temperature, the maintaining period is 1 second to 10000 seconds. If the maintaining period is shorter than 1 second, carbon of martensite may not sufficiently concentrate on austenite, and if the maintaining period time is longer than 10000 seconds, martensite may excessively softened to lower the strength of the steel sheet.

[Mode for Invention]

The present invention will now be described in more detail with reference to an example. The example is exemplary example which is intended to explain the present invention, and the present invention is not limited to the example.

**(Example)**

Steel slabs having compositions as shown in table 1 and formed by vacuum melting were heated at 1000°C to 1300°C for 1 hour in a heating furnace, and were hot-rolled to form hot-rolled steel sheets. The hot-rolled steel sheets were cooled at a predetermined temperature in a furnace. The hot rolling was finished at a temperature range of 850°C to 950°C, and the cooling temperature at the furnace was 680°C. Thereafter, the hot-rolled steel sheets were pickled and cold-rolled at a reduction ratio of 50%. The cold-rolled steel sheets were annealed at 780°C. Thereafter, the cold-rolled steel sheets were finally continuously annealed at an overaging temperature of 400°C.

[Table 1]

| Nos. | Chemical Composition (weight%) | | | | | | | |
|------|------|-----|------|--------|--------|-------|--------|-----------|
|      | C    | Si  | Mn   | P      | S      | Al    | N      | Others    |
| *IS 1 | 0.11  | 1.6 | 3.03 | 0.0027 | 0.0053 | 0.034 | 0.0033 | -         |
| IS 2  | 0.31  | 1.6 | 1.54 | 0.0023 | 0.0038 | 0.032 | 0.0022 | -         |
| IS 3  | 0.31  | 1.6 | 3.03 | 0.0025 | 0.0043 | 0.039 | 0.0153 | -         |
| IS 4  | 0.32  | 1.6 | 3.00 | 0.0029 | 0.0054 | 0.032 | 0.0037 | -         |
| IS 5  | 0.31  | 1.7 | 2.98 | 0.0035 | 0.0045 | 0.565 | 0.0027 | -         |
| IS 6  | 0.31  | 1.1 | 1.54 | 0.0160 | 0.0071 | 0.013 | 0.0039 | -         |
| IS 7  | 0.31  | 1.7 | 2.97 | 0.0032 | 0.0043 | 0.022 | 0.0040 | Ti:0.049  |
| IS 8  | 0.31  | 1.6 | 3.02 | 0.0026 | 0.0045 | 0.026 | 0.0027 | Nb:0.048  |
| IS 9  | 0.30  | 1.6 | 2.97 | 0.0042 | 0.0038 | 0.041 | 0.0032 | V:0.095   |
| IS 10 | 0.31  | 1.7 | 3.04 | 0.0051 | 0.0027 | 0.034 | 0.0028 | Zr:0.047  |
| IS 11 | 0.632 | 1.7 | 3.03 | 0.0027 | 0.0051 | 0.032 | 0.0028 | B:0.0027  |
| IS 12 | 0.31  | 1.6 | 2.98 | 0.0031 | 0.0052 | 0.030 | 0.0036 | Cr:0.50   |
| IS 13 | 0.30  | 1.5 | 2.99 | 0.0045 | 0.0028 | 0.027 | 0.0047 | Mo:0.08   |

(continued)

| Nos. | Chemical Composition (weight%) | | | | | | | |
|------|------|-----|------|--------|--------|-------|--------|----------------------|
| | C | Si | Mn | P | S | Al | N | Others |
| IS 14 | 0.31 | 1.7 | 3.10 | 0.0037 | 0.0046 | 0.045 | 0.0033 | W:0.04 |
| IS 15 | 0.29 | 1.6 | 3.03 | 0.0028 | 0.0038 | 0.033 | 0.0027 | Cu:0.12 |
| IS 16 | 0.32 | 1.6 | 2.99 | 0.0028 | 0.0053 | 0.030 | 0.0035 | Ni:0.51 |
| IS 17 | 0.31 | 1.6 | 3.01 | 0.0047 | 0.0034 | 0.027 | 0.0029 | Sb:0.047 |
| **CS 1 | 0.32 | 0.1 | 3.02 | 0.0025 | 0.0054 | 0.033 | 0.0041 | - |
| CS 2 | 0.23 | 0.2 | 1.29 | 0.0112 | 0.0022 | 0.031 | 0.0042 | Ti:0.023 B:0.0022 |
| *IS: Inventive Steel, **CS: Comparative Steel | | | | | | | | |

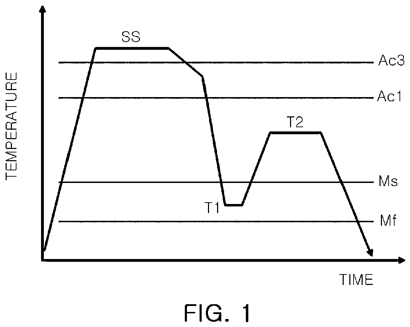

A heat treatment in a hot pressing process was simulated as shown in FIG. 1 and Table 2. In detail, the steel sheets manufactured as described above were heated at a rate of 30°C/s and maintained at 900°C (SS), higher than Ac3, for 3 minutes. Then, the steel sheets were cooled to a predetermined temperature T1 at a rate of 30°C/s and maintained for 2 seconds at the predetermined temperature T1. Thereafter, the steel sheets were reheated to a predetermined temperature T2 and maintained at the predetermined temperature T2 for 10 seconds. After that, the steel sheets were cooled to room temperature at a rate of 50°C/s. The predetermined temperatures T1 and T2 were determined by dilatation tests. Ac3, Ac1, and Ms were calculated from T1 and T2, and Mf(90%) for 90% transformation was calculated by the lever rule. Specimens were made of the steel sheets according to JIS Z 2201 No.5 SPECIMEN, and mechanical properties of the specimens were measured. The area fraction of retained austenite was calculated by Formula 1 below and the 5-peak method using areas of austenite (200), (220), and (311) peaks, and areas of ferrite (200) and (211) peaks obtained from X-ray diffraction tests. Mechanical properties and area fractions of austenite of the specimens are shown in Table 3 below.

[Formula 1]

$$V_\gamma^{XRD} = \frac{[1/2.19(I_\alpha^{200}/I_\gamma^{200})+1]+[1/1.35(I_\alpha^{220}/I_\gamma^{200})+1]+[1/1.5(I_\alpha^{200}/I_\gamma^{311})+1]+[1/1.12(I_\alpha^{211}/I_\gamma^{200})+1]+[1/0.7(I_\alpha^{211}/I_\gamma^{200})+1][1/0.78(I_\alpha^{211}/I_\gamma^{311})+1]}{6}$$

[Table 2]

| Nos. | | Ac3 (°C) | Ac1 (°C) | Ms (°C) | Mf (90%) (°C) | Heat Treatment Conditions | | | |
|------|------|------|------|------|------|------|------|------|------|
| Steel types | Specimen Nos. | | | | | SS (°C) | T1 (°C) | T2 (°C) | t2 (s) |
| *IS 1 | **ISP 1 | 852 | 669 | 377 | 164 | 900 | 269 | 421 | 10 |
| IS 2 | ISP 2 | 845 | 734 | 338 | 125 | 900 | 253 | 416 | 10 |
| IS 3 | ISP 3 | 804 | 680 | 293 | 79 | 900 | 201 | 423 | 10 |
| | ISP 4 | | | | | 900 | 198 | 423 | 100 |
| | ISP 5 | | | | | 900 | 176 | 419 | 500 |
| | ISP 6 | | | | | 900 | 194 | 521 | 10 |
| | ***CSP 1 | | | | | 900 | 194 | **821** | 10 |
| | CSP 2 | | | | | **750** | 170 | 419 | 10 |
| IS 4 | ISP 7 | 804 | 682 | 290 | 76 | 900 | 185 | 411 | 10 |
| IS 5 | ISP 8 | 856 | 686 | 315 | 104 | 900 | 237 | 402 | 10 |
| IS 6 | ISP 9 | 828 | 725 | 345 | 132 | 900 | 207 | 423 | 10 |

(continued)

| Nos. | | Ac3 (°C) | Ac1 (°C) | Ms (°C) | Mf (90%) (°C) | Heat Treatment Conditions | | | |
|---|---|---|---|---|---|---|---|---|---|
| Steel types | Specimen Nos. | | | | | SS (°C) | T1 (°C) | T2 (°C) | t2 (s) |
| | CSP 3 | | | | | 900 | 238 | **285** | 10 |
| | CSP 4 | | | | | 900 | **50** | - | 10 |
| IS 7 | ISP 10 | 809 | 683 | 292 | 78 | 900 | 200 | 4118 | 10 |
| IS 8 | ISP 11 | 807 | 680 | 294 | 80 | 900 | 208 | 423 | 10 |
| IS 9 | ISP 12 | 814 | 681 | 298 | 84 | 900 | 218 | 381 | 10 |
| IS 10 | ISP 13 | 808 | 681 | 290 | 6 | 900 | 226 | 408 | 10 |
| IS 11 | ISP 14 | 805 | 682 | 288 | 74 | 900 | 192 | 420 | 10 |
| IS 12 | ISP 15 | 800 | 687 | 288 | 75 | 900 | 212 | 419 | 10 |
| IS 13 | ISP 16 | 805 | 680 | 299 | 87 | 900 | 195 | 406 | 10 |
| IS 14 | ISP 17 | 807 | 679 | 288 | 74 | 900 | 191 | 402 | 10 |
| IS 15 | ISP 18 | 807 | 678 | 300 | 86 | 900 | 206 | 437 | 10 |
| IS 16 | ISP 19 | 789 | 659 | 279 | 70 | 900 | 181 | 387 | 10 |
| IS 17 | ISP 20 | 804 | 681 | 292 | 78 | 900 | 198 | 392 | 10 |
| ****CS 1 | CSP 5 | 764 | 660 | 309 | 96 | 900 | 201 | 422 | 10 |
| CS 2 | CSP 6 | 791 | 686 | 380 | 169 | 900 | 215 | 416 | 10 |
| *IS: Inventive Steel, **ISP: Inventive Specimen, ***CSP: Comparative Specimen, ****CS: Comparative Steel | | | | | | | | | |

[Table 3]

| Nos. | | YP (MPa) | TS (MPa) | E1 (%) | Microstructure (Area fraction%) | | |
|---|---|---|---|---|---|---|---|
| Steel Types | Specimen Nos. | | | | *Retained γ | **M+TM | ***F |
| IS 1 | ISP 1 | 1003 | 1194 | 13.7 | 9.5 | 88.0 | 2.5 |
| IS 2 | ISP 2 | 1019 | 1291 | 14.8 | 13.3 | 83.1 | 3.6 |
| IS 3 | ISP 3 | 971 | 1594 | 14.8 | 14.2 | 84. 6 | 1.2 |
| | ISP 4 | 1063 | 1479 | 16.8 | 16.6 | 82.7 | 0.7 |
| | ISP 5 | 1213 | 1445 | 17.7 | 17.0 | 82.5 | 0.5 |
| | ISP 6 | 791 | 1396 | 14.2 | 12.7 | 86.5 | 0.8 |
| | CSP 1 | 1221 | 1970 | 1.6 | 3.7 | 95.6 | 0.7 |
| | CSP 2 | 601 | 1460 | 3.9 | 3.5 | 80.8 | 15.7 |
| IS 4 | ISP 7 | 1015 | 1563 | 17.0 | 15.2 | 84.3 | 0.5 |
| IS 5 | ISP 8 | 973 | 1518 | 18.3 | 16.3 | 79.5 | 4.2 |
| IS 6 | ISP 9 | 1342 | 1491 | 13.8 | 11.4 | 87.7 | 0.9 |
| | CSP 3 | 1263 | 1867 | 6.1 | 0.6 | 98.7 | 0.7 |
| | CSP 4 | 1327 | 1973 | 5.3 | 0.1 | 99.5 | 0.4 |
| IS 7 | ISP 10 | 1034 | 1601 | 17.6 | 13.3 | 86.2 | 0.5 |
| IS 8 | ISP 11 | 974 | 1591 | 15.2 | 14.3 | 84.8 | 0.9 |
| IS 9 | ISP 12 | 1032 | 1507 | 16.3 | 14.2 | 85.4 | 0.4 |

(continued)

| Nos. | | YP (MPa) | TS (MPa) | E1 (%) | Microstructure (Area fraction%) | | |
|---|---|---|---|---|---|---|---|
| Steel Types | Specimen Nos. | | | | *Retained γ | **M+TM | ***F |
| IS 10 | ISP 13 | 1063 | 1542 | 16.7 | 14.8 | 84.5 | 0.7 |
| IS 11 | ISP 14 | 973 | 1597 | 17.0 | 14.2 | 83.4 | 2.4 |
| IS 12 | ISP 15 | 884 | 1647 | 15.5 | 15.2 | 83.5 | 1.3 |
| IS 13 | ISP 16 | 1106 | 1612 | 16.8 | 14.7 | 84.5 | 0.8 |
| IS 14 | ISP 17 | 1057 | 1586 | 16.9 | 14.8 | 84.9 | 0.3 |
| IS 15 | ISP 18 | 1152 | 1573 | 15.4 | 13.7 | 85.9 | 0.4 |
| IS 16 | ISP 19 | 1139 | 1602 | 17.7 | 16.8 | 82.5 | 0.7 |
| IS 17 | ISP 20 | 1053 | 1582 | 16.2 | 14.5 | 84.7 | 0.8 |
| CS 1 | CSP 5 | 1090 | 1406 | 7.4 | 0.2 | 99.4 | 0.4 |
| CS 2 | CSP 6 | 1158 | 1260 | 6.4 | 0.0 | 99.4 | 0.6 |
| *Retained γ: retained austenite, **M: martensite, TM: tempered martensite, ***F: ferrite | | | | | | | |

Referring to Tables 1 to 3, Inventive Specimens 1 to 20, formed of steels having compositions and manufactured by the method according to the present invention, have 5% or more by area fraction of retained austenite and good elongation. However, Comparative Specimens 5 and 6 have less than 5% by area fraction of retained austenite and poor elongation because Comparative Specimens 5 and 6 do not have compositions according to the present invention.

Although Comparative Specimens 1 and 2 have compositions according to the present invention, T2 and SS are not within the ranges proposed by the present invention. Thus, Comparative Specimens 1 and 2 do not have 5% or more of retained austenite and thus have poor elongation.

Although Comparative Specimens 3 and 4 have compositions according to the present invention, T2 and T1 are not within the ranges proposed by the present invention. Thus, Comparative Specimens 3 and 4 have poor elongation. In the case of Comparative Specimen 3, T2 is lower than Ms, and thus a sufficient period of time and temperature cannot be ensured to stabilize retained austenite. As a result, in the final cooling process, most austenite transforms to martensite, and thus austenite cannot be sufficiently retained. In the case of Comparative Specimen 4, T1 is lower than Mf which is advantageous in terms of high strength but disadvantageous in terms of retaining a desired amount of austenite because most austenite transforms to martensite.

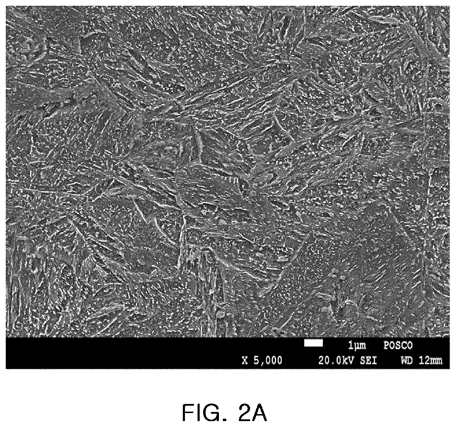

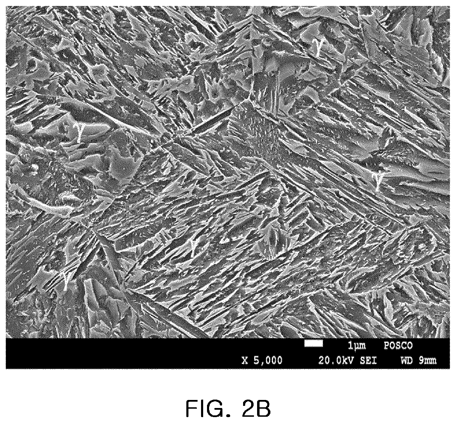

FIGS. 2(a) and 2(b) are microstructure images of the formed members. FIG. 2(a) is a microstructure image of Comparative Specimen 6, and FIG. 2(b) is a microstructure image of Inventive Sample 7. Referring to FIGS. 2(a) and 2(b), Comparative Specimen 6 to which sufficient Si is not added does not retain sufficient austenite, and thus, a large amount of cementite precipitates on grains or grain boundaries. However, in the case of Inventive Sample 7, most retained austenite is stabilized and present at grain boundaries because sufficient carbon diffuses during a heat treatment at T2.

**Claims**

1.   A formed member having enhanced ductility, the formed member consisting of, bv weight%, C: 0.1% to 1.0%. Si+Al: 0.4% to 3.0%. Mn: 0.1% to 5.0%. P: 0.0001% to 0.1%, S: 0.0001% to 0.03%, N 0.03% or less but not 0%, optionally further comprising at least one selected from the group consisting of (a), (b), (c), (d), and (e), wherein: (a) at least one selected from the group consisting of Cr: 0.01% to 2.0%. Mo: 0.01% to 2.0% and W: 0.01% to 2.0%: (b) at least one selected from the group consisting of Ti: 0.001% to 0.4%, Nb: 0.001% to 0.4%. Zr: 0.001% to 0.4% and V: 0.001% to 0.4%: (c) at least one of Cu: 0.005% to 2.0% and Ni: 0.005% to 2.0%: (d) B: 0.0001% to 0.01%; and (e) Sb: 0.001% to 0.1% and the balance of Fe and inevitable impurities. wherein the formed member has a microstructure consisting of by area fraction: 5% to 40% of retained austenite. 60% to 95% of martensite, and 10% or less (including 0%) of ferrite, and
   wherein the formed member has a tensile strength of 1000 Mpa or greater and an elongation of 10% or greater.

**2.** A method for manufacturing a formed member, the method comprising:

performing a pressing process on a steel sheet consisting of, by weight%, C: 0.1% to 1.0%, Si+Al: 0.4% to 3.0%, Mn: 0.1% to 5.0%, P: 0.0001% to 0.1%, S: 0.0001% to 0.03%, N: 0.03% or less but not 0%, optionally further comprising at least one selected from the group consisting of (a), (b), (c), (d), and (e), wherein: (a) at least one selected from the group consisting of Cr: 0.01% to 2.0%, Mo: 0.01% to 2.0%, and W: 0.01% to 2.0%; (b) at least one selected from the group consisting of Ti: 0.001% to 0.4%, Nb: 0.001% to 0.4%, Zr: 0.001% to 0.4%, and V: 0.001% to 0.4%; (c) at least one of Cu: 0.005% to 2.0% and Ni: 0.005% to 2.0%; (d) B: 0.0001% to 0.01%; and (e) Sb: 0.001% to 0.1% and the balance of Fe and inevitable impurities;

quenching the steel sheet to an Ms-Mf temperature range; and

heating the quenched steel sheet to a temperature range equal to or lower than Ac1 from a temperature equal to or higher than the Ms point and maintaining the steel sheet within the temperature range, and

wherein the method further comprises heating the steel sheet to a temperature, within an austenite formation temperature range, equal to or higher than the Ac3 point before or after performing the pressing process, and

the quenching is performed at a rate of 10 °C/s to 500°C/s, and

the maintaining of the steel sheet within the temperature range continues for 1 second to 10000 seconds.

**Patentansprüche**

**1.** Formteil mit verbesserter Duktilität, wobei das Formteil in Gew.-% besteht aus C: 0,1 % bis 1,0 %, Si + Al: 0,4 % bis 3,0 %, Mn: 0,1 % bis 5,0 %, P: 0,0001 % bis 0,1 %, S: 0,0001 % bis 0,03 %, N: 0,03 % oder weniger, aber nicht 0 %, optional darüber hinaus mindestens ein Element umfassend, das aus der Gruppe ausgewählt ist, die aus (a), (b), (c), (d) und (e) besteht, worin: (a) mindestens ein Element ist, das aus der Gruppe ausgewählt ist, die aus Cr: 0,01 % bis 2,0 %, Mo: 0,01 % bis 2,0 % und W: 0,01 % bis 2,0 % besteht; (b) mindestens ein Element ist, das aus der Gruppe ausgewählt ist, die aus Ti: 0,001 % bis 0,4 %, Nb: 0,001 % bis 0,4 %, Zr: 0,001 % bis 0,4 % und V: 0,001 % bis 0,4 % besteht; (c) Cu: 0,005 % bis 2,0 % und/oder Ni: 0,005 % bis 2,0 %; (d) B: 0,0001 % bis 0,01 %; und (e) Sb: 0,001 % bis 0,1 %, und der Rest aus Fe und unvermeidbaren Verunreinigungen besteht,

wobei das Formteil eine Mikrostruktur hat, die im Flächenanteil besteht aus: 5 % bis 40 % Restaustenit, 60 % bis 95 % Martensit und 10 % oder weniger (einschließlich 0 %) Ferrit, und

wobei das Formteil eine Zugfestigkeit von 1000 MPa oder mehr und eine Dehnung von 10 % oder mehr hat.

**2.** Verfahren zum Herstellen eines Formteils, wobei das Verfahren umfasst:

einen Pressprozess an einem Stahlblech durchzuführen, das in Gew.-% besteht aus C: 0,1 % bis 1,0 %, Si + Al: 0,4 % bis 3,0 %, Mn: 0,1 % bis 5,0 %, P: 0,0001 % bis 0,1 %, S: 0,0001 % bis 0,03 %, N: 0,03 % oder weniger, aber nicht 0 %, optional darüber hinaus mindestens ein Element umfassend, das aus der Gruppe ausgewählt ist, die aus (a), (b), (c), (d) und (e) besteht, worin: (a) mindestens ein Element ist, das aus der Gruppe ausgewählt ist, die aus Cr: 0,01 % bis 2,0 %, Mo: 0,01 % bis 2,0 % und W: 0,01 % bis 2,0 % besteht; (b) mindestens ein Element ist, das aus der Gruppe ausgewählt ist, die aus Ti: 0,001 % bis 0,4 %, Nb: 0,001 % bis 0,4 %, Zr: 0,001 % bis 0,4 % und V: 0,001 % bis 0,4 % besteht; (c) Cu: 0,005 % bis 2,0 % und/oder Ni: 0,005 % bis 2,0 %; (d) B: 0,0001 % bis 0,01 %; und (e) Sb: 0,001 % bis 0,1 %, und der Rest aus Fe und unvermeidbaren Verunreinigungen besteht;

das Stahlblech auf einen Ms-Mf-Temperaturbereich abzuschrecken; und

das abgeschreckte Stahlblech aus einer Temperatur, die gleich dem oder höher als der Ms-Punkt ist, auf einen Temperaturbereich zu erwärmen, der gleich oder höher als Ac1 ist, und das Stahlblech in dem Temperaturbereich zu halten, und

wobei das Verfahren darüber hinaus umfasst, das Stahlblech auf eine Temperatur innerhalb eines Austenitentstehungstemperaturbereichs, die gleich dem oder höher als der Ac3-Punkt ist, vor oder nach dem Durchführen des Pressprozesses zu erwärmen, und

das Abschrecken mit einer Rate von 10° C/s bis 500° C/s erfolgt, und

das Halten des Stahlblechs innerhalb des Temperaturbereichs 1 Sekunde bis 10000 Sekunden dauert.

**Revendications**

**1.** Élément moulé à ductilité améliorée, l'élément moulé étant composé de, en % de poids, C : 0,1 % à 1,0 %, Si + Al : 0,4 % à 3,0 %, Mn : 0,1 % à 5,0 %, P : 0,0001 % à 0,1 %, S : 0,0001 % à 0,03 %, N : 0,03 % ou moins mais pas 0 %, comprenant en outre facultativement au moins un élément sélectionné dans le groupe constitué par (a), (b), (c), (d), et (e), où : (a) au moins un élément sélectionné dans le groupe constitué par Cr : 0,01 % à 2,0 %, Mo : 0,01 % à 2,0 % et W : 0,01 % à 2,0 % ; (b) au moins un élément sélectionné dans le groupe constitué par Ti : 0,001 % à 0,4 %, Nb : 0,001 % à 0,4 %, Zr : 0,001 % à 0,4 % et V : 0,001 % à 0,4 % ; (c) au moins l'un de Cu : 0,005 % à 2,0 % et Ni : 0,005 % à 2,0 % ; (d) B : 0,0001 % à 0,01 % ; et (e) Sb : 0,001 % à 0,1 % et le solde de Fe et d'impuretés inévitables,

sachant que l'élément moulé a une microstructure composée de, en fraction d'aire : 5 % à 40 % d'austénite résiduelle, 60 % à 95 % de martensite, et 10 % ou moins (incluant 0 %) de ferrite, et

sachant que l'élément moulé a une résistance à la traction de 1000 Mpa ou plus et un allongement de 10 % ou plus.

2.  Procédé de fabrication d'un élément moulé, le procédé comprenant :

    l'exécution d'un processus de compression sur une tôle d'acier composée de, en % de poids, C : 0,1 % à 1,0 %, Si + Al : 0,4 % à 3,0 %, Mn : 0,1 % à 5,0 %, P : 0,0001 % à 0,1 %, S : 0,0001 % à 0,03 %, N : 0,03 % ou moins mais pas 0 %, comprenant en outre facultativement au moins un élément sélectionné dans le groupe constitué par (a), (b), (c), (d), et (e), où : (a) au moins un élément sélectionné dans le groupe constitué par Cr : 0,01 % à 2,0 %, Mo : 0,01 % à 2,0 %, et W : 0,01 % à 2,0 % ; (b) au moins un élément sélectionné dans le groupe constitué par Ti : 0,001 % à 0,4 %, Nb : 0,001 % à 0,4 %, Zr : 0,001 % à 0,4 %, et V : 0,001 % à 0,4 % ; (c) au moins l'un de Cu : 0,005 % à 2,0 % et Ni : 0,005 % à 2,0 % ; (d) B : 0,0001 % à 0,01 % ; et (e) Sb : 0,001 % à 0,1 % et le solde de Fe et d'impuretés inévitables ;
    la trempe de la tôle d'acier à une plage de température Ms-Mf ; et
    le chauffage de la tôle d'acier trempée à une plage de température égale ou inférieure à Ac1 depuis une température égale ou supérieure au point Ms et le maintien de la tôle d'acier dans la plage de température, et sachant que le procédé comprend en outre le chauffage de la tôle d'acier à une température, au sein d'une plage de température de formation d'austénite, égale ou supérieure au point Ac3 avant ou après l'exécution du processus de compression, et
    la trempe est effectuée à un taux de 10 °C/s à 500 °C/s, et
    le maintien de la tôle d'acier dans la plage de température se poursuit pendant 1 seconde à 10 000 secondes.

FIG. 1

FIG. 2A

FIG. 2B

**REFERENCES CITED IN THE DESCRIPTION**

**Patent documents cited in the description**

- KR 20070110914
- KR 20070057689
- WO 2007064172 A1
- US 6296805 B